# EUROPEAN PATENT APPLICATION

(11) **EP 1 154 300 A2**
(43) Date of publication of application: **14.11.2001**
(21) Application number: 01304109.0
(22) Date of filing: 08.05.2001
(51) Int. Cl.: G02B 6/42

(54) **Fiber optic interface device on folded circuit board and method of making the interface device**

(30) Priority: 08.05.2000 GB 0011065
(71) Applicant: Mitel Semiconductor AB, 175 26 Järfälla (SE)
(72) Inventor: Kronlund, Bertil, 139 21 Varmdo (SE)
(74) Representative: Harding, Richard Patrick

(57) **Abstract**

A fiber optic interface device includes an optical transducer mounted on a first portion of a mounting board, a housing mounted over the optical transducer having a bore aligned with the optical transducer for accommodating an optic fiber and having a cavity on its underside. A lens is mounted in the bore between the optical transducer and the optic fiber. An electronic interface circuit is mounted on a second portion of the mounting board folded up relative to said the portion so that the second portion abuts the housing with the electronic interface circuit located in the cavity. The housing can be mounted on the board using surface mount technology.
Furthermore a method of making the fiber optic interface device is disclosed.

## Description

This invention relates to the field of optic fibers, and in particular to an interface device for coupling an electronic circuit to an optic fiber.

Optic fiber has been used in telecommunications and computer applications for a number of years because of its high bandwidth capability. For example, optic fiber carries SONET signals. FDD1 technology is used for LAN applications in business offices. Such applications, however, require very expensive optical transducers, which are not suitable for the domestic or small office market. As a result, optic fiber technology has been limited to the high end market.

There is a need to develop optic fiber technology to make it more accessible to the domestic or small office user. The high bandwidth, light weight properties of optic fiber make it highly advantageous for this use, particularly with the advent of low cost, multi-mode plastic fibers.

An object of the invention is to meet this need.

According to the present invention there is provided an optic fiber interface device, comprising an optical transducer mounted on a first portion of a mounting board, a housing mounted over said optical transducer having a bore aligned with said optical transducer for accommodating an optic fiber and having a cavity on its underside, a lens mounted in said bore between said optical transducer and said optic fiber, and an electronic circuit mounted on a second portion of said mounting board folded up relative to said first portion so that said second portion abuts said housing with said electronic interface circuit located in said cavity.

The mounting board is preferably a printed circuit board providing electrical connections between said electronic interface circuit and said optical transducer.

The optical transducer may be a PIN diode in the case of a receiver device, or an RC-LED (Resonant Cavity LED) or VCSEL (Vertical Cavity Surface Emitting Laser) in the case of a transmitter.

The housing is preferably a block-shaped plastic molded housing so that the second portion extends at right angles to the first portion.

The whole package can be mass produced a minimal cost and made small in size, typically 4 x 4 x 4 mm.

In the case of a receiver, the electronic interface circuit is a post-amplifier providing electrical output signals, whereas in the case of a transmitter the electronic interface circuit is a driver for the VCSEL or RCLED device.

The electronic circuit is typically a low power, silicon technology integrated circuit providing either a driver or pre-amplifier for the optical transducer.

Such as device has the advantages of low cost, high bandwidth, small size, low power consumption, and simplicity for the end user.

The invention also provides a method of making an interface device for coupling an electrical circuit to an optic fiber, comprising providing a circuit board with a first portion and a second portion foldable relative to said first portion, mounting an optical transducer on said first portion, mounting an electronic circuit on said second portion, folding up said second portion toward said first portion while locating a housing between said first and second portions with said first portion abutting a first face of said housing and said second portion abutting a second face of said housing, said housing having a central bore accommodating said transducer and a cavity on an underside thereof accommodating said circuit, and placing a lens in said bore to couple light between an optic fiber and said optical transducer.

The invention will now be described in more detail, by way of example only, with reference to the accompanying drawings, in which:-
Figure 1 illustrates schematically the structure of an interface device;
Figure 2 is a perspective view of the interface device shown in Figure 1; and
Figure 3 is a schematic view of a device in accordance with the invention.

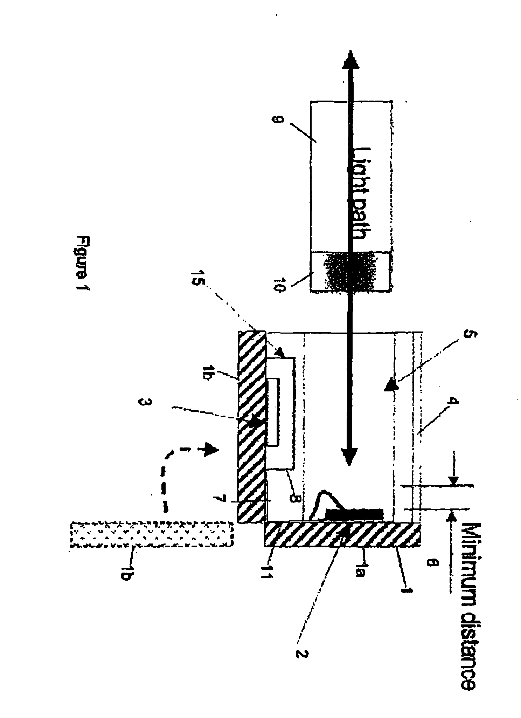

In figure 1, a printed circuit board (PCB) 1 has portions 1a and 1b separated by a score line 1c. In manufacture, the PCB 1 is laid flat and the optical transducer 2, typically an RC-LED or VCSEL wire bonded to the printed circuit board 1.

The transducer 2 is connected to an integrated circuit 3 providing the driver and controlling interface for the optical transducer 2 by tracks 11 on top side of the printed circuit board 1.

Next the rear side 6 of a square molded plastic block 4, typically 4 x 4 x 4 mm, and having a central bore 5 is bonded onto the portion 1a of PBC 1 with the optical transducer 2 accommodated in the bore 5. The block 4 is provided on its underside with a rectangular cavity 8. It can also be metallized on the outside for shielding purposes if desired.

Next the portion 1b of the PCB 1 is folded up and bonded to the underside 7 of the block 1 with the integrated circuit 3 accommodated in the cavity 8. This can be provided on its internal surface with a metalization layer 15 to provide effective shielding for the circuit 3. Finally a fiber ferrule 9 with a plastic lens 10 formed at one end thereof is fitted in the bore 5 with the lens spaced a as close as possible to the transducer 2 to couple light from the transducer 2 into the fiber plastic fiber.

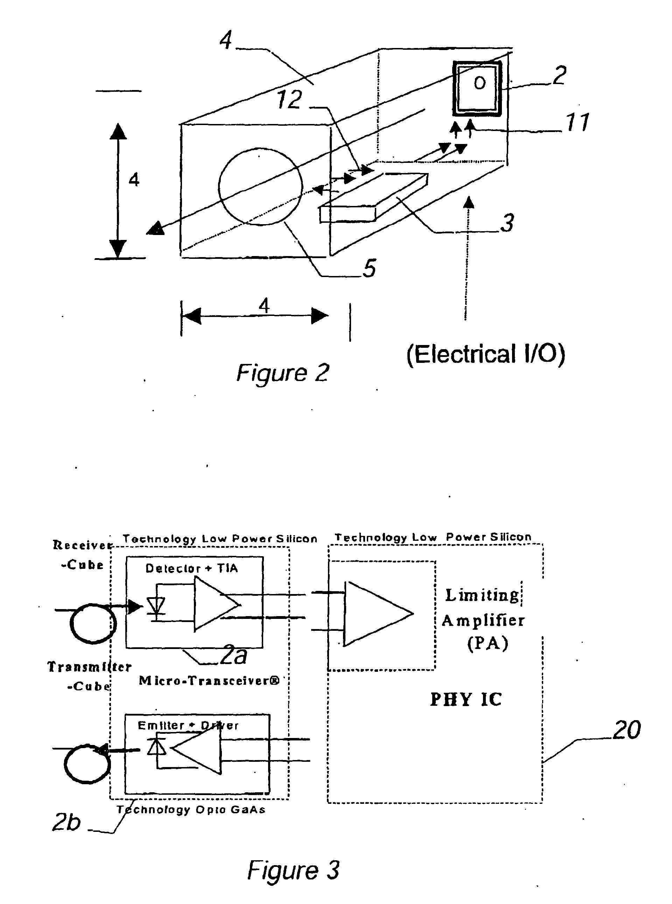

Figure 2 shows a perspective view of the device. The integrated circuit 3 is flip-chip bonded onto the printed circuit board portion 1a so as to make direct electrical connection with tracks 11 leading to transducer 1 and electrical signal lines 12 for connection to external circuitry.

After positioning the fiber ferrule 9, which is not shown in Figure 2, an optic fiber can be inserted into bore 5 for optical coupling to the free end face of the ferrule 9. The bore 5 can be adapted to accommodate optic fiber diameters of 0.7 to 1.25 mm. The bore 5 ensures alignment of the ferrule 9 and lens 10 with the transducer 2.

The receiver is similar in design to the transmitter except that the transducer 2 is a PIN diode for generating electrical signals form an optical input. Alternatively, it may be a PIN-TIA. The integrated circuit 3 in the case of the receiver is a post amplifier for amplifying the electrical signals produced by the optical transducer.

The optic fiber employed with the interface device is preferably clad PMMA (poly methacrylate). This provides a multimode fiber suitable for short range applications, for example, 50 meters in the 500-1000Mbs range.

The devices can be arranged in groups on a common circuit board to provide both transmitter and receiver capability. The transmitters and receivers can be arranged in pairs, or there may be different numbers of transmitters and receivers, for example, four transmitters and one receiver.

The devices can be easily packaged using SMD packaging technology into low-cost connectors that provide a direct optic fiber to copper wire interface.

Normally, the transmitter and receiver units are mounted separately on the printed circuit board using surface mount technology. This is inexpensive and conducive to volume production. Cross talk is eliminated due to the separation of the two components.

The blocks 4 may of course be cut to any suitable size and built into an array. The array can be built into a standard connector.

Figure 3 shows a schematic view of the layout of a transceiver device. Detector 2a includes low power silicon TIA preamplifier. Transmitter 2b included the driver 3 again employing low power silicon technology. The transceiver devices are connected to a low power silicon technology chip 20, which includes all the circuitry to provide the electro-optical interface.

The device lends itself to volume production. The portion 1a typically forms the edge portion of a circuit board with portion 1b forming the main portion.

The optical transducer 2 is preferably mounted on the portion 1a using surface mount technology.

Next the integrated circuit 3 is flip-chip bonded to the portion 1b, which is then folded up an bonded to the underside of the block 5. Of course, a whole array of devices can be manufactured in this way simultaneously.

The invention described has a number important features. Alignment of the fiber is relatively easy. The block 4 can provide shielding and it also can provided heat distribution. Ball Grid Array technology can also be used for connection to the circuit 3 if desired.

As indicated earlier, one of the objects of the invention is to provide fiber optic connectivity in the home and small office market. The invention achieves this by providing a very low cost device operable in the 500-1000Mbs range that is small and can be incorporated into a standard connector. It can be used to connect various peripherals, such as DVDs, printers, computers, DATs, Digital televisions, digital video recorders, loudspeakers, monitors and numerous other peripheral devices, especially those requiring high bandwidth. The transceiver can be incorporated directly in the devices, or alternatively it can be connected to an electrical cable connection. For example, a serial cable could connect to an interface connector according to the invention, which would provide an optical output for transmission down a multi-mode optic fiber, where at the far end another connector could convert the signal back into electrical for input to the far end device. In this configuration, the device can be incorporated into an optical extension cord for interposition between two electrical cables, with the opto-electrical interfaces being packaged in the connectors at each end of the fiber.

## Claims

1. An optic fiber interface device, comprising an optical transducer mounted on a first portion of a mounting board, a housing mounted over said optical transducer having a bore aligned with said optical transducer for accommodating an optic fiber and having a cavity on its underside, a lens mounted in said bore between said optical transducer and said optic fiber, and an electronic circuit mounted on a second portion of said mounting board folded up relative to said first portion so that said second portion abuts said housing with said electronic interface circuit located in said cavity.

2. An optic fiber interface device as claimed in claim 1, wherein said housing is a plastic block.

3. An interface device as claimed in claim 1 or 2, wherein the internal surface of said cavity is metallized to provide electrical shielding for said electronic circuit.

4. An interface device as claimed in any of claims 1 to 3, wherein said housing is metallized to shield the internal components thereof.

5. An interface device as claimed in any one of claims 1 to 4, wherein said electronic circuit is connected to said optical transducer by tracks on said circuit board.

6. An interface device as claimed in any one of claims I to 5, wherein said circuit board is a printed circuit board.

7. An interface device as claimed in any one of claims 1 to 6, wherein said second portion is folded up substantially at right angles to said first portion.

8. An interface device as claimed in any one of claims I to 7, wherein said bore contains a fiber ferrule having a lens mounted at one end.

9. An interface device as claimed in any one of claims 1 to 8, wherein said electronic circuit is an integrated circuit.

10. An interface device as claimed in any one of claims I to 9, wherein said integrated circuit is flip-chip bonded onto said first portion of said circuit board.

11. A method of making an interface device for coupling an electrical circuit to an optic fiber, comprising providing a mounting board with a first portion and a second portion foldable relative to said first portion, mounting an optical transducer on said first portion, mounting an electronic circuit on said second portion, folding up said second portion toward said first portion while locating a housing between said first and second portions with said first portion abutting a first face of said housing and said second portion abutting a second face of said housing, said housing having a central bore accommodating said transducer and a cavity on an underside thereof accommodating said circuit, and placing a lens in said bore to couple light between an optic fiber and said optical transducer.

12. A method as claimed in claim 11, wherein said housing is mounted on said first portion over said transducer prior to folding up said second portion.

13. A method as claimed in claim 11 or 12, wherein said electronic circuit is an integrated circuit flip-chip bonded onto said second portion of said circuit board.

14. A method as claimed in any of claims 11 to 13, further comprising metallizing an internal surface of said cavity to shield said electronic circuit.

15. A method as claimed in any of claims 11 to 14, further comprising mounting said lens on one end of a fiber ferrule, and placing said ferrule in said bore in alignment with said optical transducer.

16. A method as claimed in claim 11, said first portion is folded up to lie at right angles to said second portion.

17. A method as claimed in claim 11, wherein said electronic circuit is mounted on said circuit board using ball grid array technology.

18. A method as claimed in claim 11, wherein said housing is in the form of a molded plastic block.
